# EUROPEAN PATENT SPECIFICATION

(11) **EP 1 688 649 B1**
(45) Date of publication and mention of the grant of the patent: **25.03.2009**
(21) Application number: 06075236.7
(22) Date of filing: 02.02.2006
(51) Int. Cl.: F16J 15/32

(54) **Improved seal**
Verbesserte Dichtung
Joint d'étanchéité amélioré

(30) Priority: 04.02.2005 BE 200500064
(43) Date of publication of application: 09.08.2006
(73) Proprietor: H.T.M.S., naamloze vennootschap, 2800 Mechelen (BE)
(72) Inventor: Ilegems, Rudiger, 1840 Londerzeel (BE)
(74) Representative: Donné, Eddy

(56) References cited:
- EP-A- 0 529 928
- US-A- 3 114 561
- US-A- 4 244 192
- US-A- 4 561 662
- US-A- 5 022 663

## Description

The present invention concerns an improved seal.

In particular, the invention concerns a seal that is used under extreme conditions such as high temperatures, high pressures, nuclear radiation, corrosive chemical environments and the like.

It is known, as disclosed by EP 0 529 928, for applications under such extreme conditions, to make use of metal annular seals with a U-shaped cross section which are clamped between the moving parts to be sealed. Usually, a rotary movement of a shaft is concerned, or an up-and-down movement of a piston.

The sealing is in this case provided on the inner and outer edges of the seal which are formed by the legs of the U-shaped seal forming a seal along cylindrical contact zones with each of the parts moving in relation to each other.

A disadvantage of these seals is that they are very sensitive to leaks at the above-mentioned cylindrical contact zones.

Another disadvantage of the known seals is their high cost price, due to the very high demands on dimensional tolerances of the housing in which the seals have to be provided and on the precision required for the assembly.

Another disadvantage is that these seals are usually not capable of allowing for shrinkage and expansion of the parts that move in relation to each other in case of alternating temperature cycles.

It is also known to make use of seal materials such as graphite or plastic under the above-mentioned extreme conditions, which are provided between the parts moving in relation to each other and which are kept in place by means of a metal ring.

A disadvantage of this known type of seals is that they often lead to leaks at higher temperatures, and consequently have a negative influence on the operational safety of the device in which they are applied.

Another disadvantage is that the latter known seals are not suitable for applications with large temperature and pressure variations, or whereby the installation is often re-started.

The present invention aims to remedy one or several of the above-mentioned and other disadvantages.

To this end the present invention concerns an improved seal which seals a shaft moving in a passage in relation to a housing from said housing, whereby the seal is located in a groove of the wall that separates the housing from the passage, whereby the improved seal mainly consists of an annular metal element with a cross section formed of a first predominantly U-shaped or C-shaped part with two legs on either side of the centreline surface X-X' of the annular element perpendicular to the axis Z-Z' around which the shaft rotates and a second lip-shaped part connected to the latter on the one hand, and of means which make it possible, when the seal is compressed in a direction which is orthogonal to the above mentioned surface of the seal, to push the lip-shaped part away from the U-shaped or C-shaped part on the other hand.

Such a seal is used for example for sealing a shaft which is provided in a housing in a rotating or axially movable manner.

In this case, the seal is provided around the shaft, for example in a groove in the housing, whereby the seal is then compressed in the axial direction, for example by drawing tight a lid which seals the groove, such that the lip-shaped part is pressed against the shaft due to this axial compression.

An advantage of such a seal according to the invention is that it offers more operational safety than the seals known until now, and that it provides for a very efficient sealing of gases as well as liquids, under normal as well as extreme circumstances at high temperatures, pressures and the like.

This is partly due to the fact that the annular metal element is constantly pressed with its lip-shaped part against the shaft in the radial direction, and is pressed with its U-shaped or C-shaped part against the housing in the axial direction as it is fixed in the groove.

Another advantage is that, as the seal is permanently pressed between the parts moving in relation to each other, larger dimensional tolerances are allowed for the housing, which moreover simplifies the application of the seal.

Another advantage, coupled to the permanent pressing of the seal, is that the improved seal according to the invention allows for shrinkage and expansion of the parts moving in relation to each other in case of alternating temperature cycles.

Moreover, such a seal according to the invention makes it possible to adjust the pressing forces, as a function of the application, by compressing the seal more or less in the axial direction, as a result of which, for example in less demanding applications, the frictional forces between the seal and the moving parts can be reduced to thus limit the wear.

In order to better explain the characteristics of the invention, the following preferred embodiment is given as an example only without being limitative in any way, with reference to the accompanying figures, in which:
figure 1 represents an improved seal according to the invention seen from above;
figure 2 represents a section along line II-II of figure 1 to a larger scale;
figure 3 represents a section as in figure 2, but in another position;
figure 4 is a section of an application in which a seal as in figures 1 and 2 is applied;
figure 5 represents the part indicated by F5 in figure 4 to a larger scale.

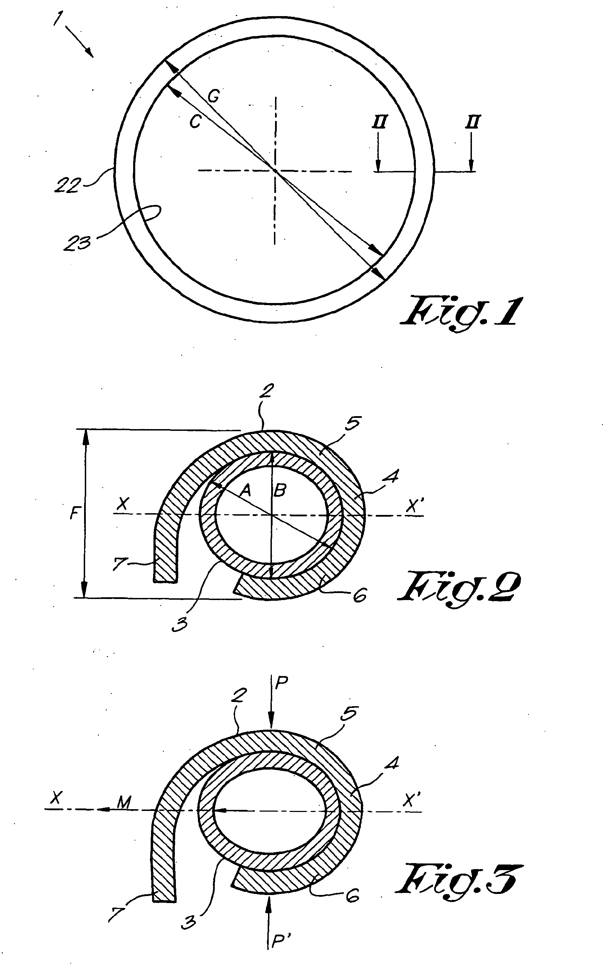

The improved seal 1, as represented in figures 1 and 2, mainly consists of an annular metal element 2 and a compressible metal ring 3.

The annular metal element 2 in this case has a cross section with a first predominantly U-shaped or C-shaped part 4 with two legs 5 and 6, mainly on either side of the surface X-X' of the seal 1, and a second lip-shaped part 7 in the extension of the leg 5, whereby this lip-shaped part 7 is directed mainly diagonally to the above-mentioned surface X-X' of the seal 1.

The metal compressible ring 3 is held in the U-shaped or C-shaped part 4 of the annular metal element 2, and to this end has an outer diameter A which mainly corresponds to the inner diameter B of the above-mentioned U-shaped or C-shaped part 4 of the annular metal element 2.

The metal compressible ring 3 is preferably made hollow and has an annular section in the given example.

Thanks to the compressible character of the metal ring 3, this ring forms a means which makes it possible, as represented in figure 3, to push the lip-shaped part 7 of the annular metal element 2 away from the U-shaped or C-shaped part 4 in case of an axial compression in the direction of arrows P en P', crosswise to the surface X-X' of the seal 1, preferably in the radial direction as indicated by arrow M in figure 3.

In case of a compression according to the arrows P-P', the annular element 2 will indeed bulge in the surface X-X' of the seal 1 and thus push away the lip-shaped part 7.

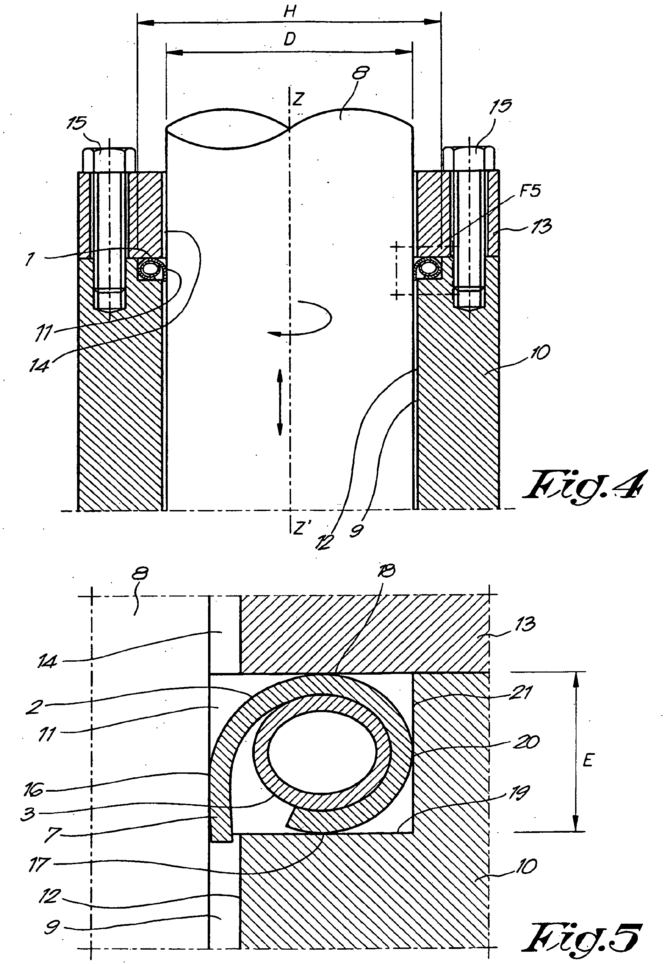

The use of such a seal 1 is very simple and is illustrated by means of figure 4, which represents an application in which a shaft 8 to be sealed is provided in a passage 9 in a housing 10.

For the sealing between the shaft 8 and the housing 10 is used a seal 1 according to the invention to that end, whose inner diameter C, when unloaded, largely corresponds to the diameter D of the shaft 8.

The seal 1 is thereby provided around the shaft 8 and is situated in a circular groove 11 which is provided in the wall 12 which limits the passage 9 and whose depth E in the axial direction Z-Z' is smaller than the thickness F of the seal 1.

Once the seal 1 has been provided in the groove 11, a lid 13 is screwed to the housing 10 with a passage 14 for the shaft 8 by means of bolts 15, whereby this lid 13, as the depth E is smaller than the thickness F of the seal 1, compresses the seal 1 in the axial direction Z-Z', such that thanks to the elastic action of the compressible metal ring 3, the lip-shaped part 7 is pressed against the shaft 8.

In this manner, as is represented in greater detail in figure 5, an efficient seal is obtained at the contact zone 16 between the lip-shaped part 7 and the shaft 8 and at the contact zones 17 and 18, at the bottom 19 of the groove 11 and of the lid 13 respectively.

In the given example, the outer diameter G of the seal 1, when it is not in use, is somewhat smaller than or equal to the outer diameter H of the groove 11, such that, in this case, with an axial compression of the seal 1, an additional contact zone 20 is formed at the point of contact of the groove 11 with the wall 21.

It is clear that, in this manner, a permanent pressure is exerted by the compressible metal ring 3 on the annular metal element 2, which pressure is transformed in a permanent press-on force at the contact zones 16, 17, 18 and 20 against the parts moving in relation to each other, namely the shaft 8 and the housing 10.

The invention is by no means limited to the embodiment as described above. In other embodiments, the lip-shaped part 7 of the annular metal element 2 can be extended or shortened for example.

Alternatively, the lip-shaped part could be situated on the outside 22 as well, for example, instead of on the inside 23 of the improved seal 1.

Embodiments whereby the lip-shaped part 7 assumes another bent shape, such as for example a U-shape or an S-shape, are not excluded either.

The form of the U-shaped or C-shaped part 4 of the annular metal element 2 can be either or not symmetrical in relation to the surface X-X' of the seal.

Also alternatives for the compressible metal ring 3 are possible, for example rings which are either or not hollow or which have an oval section or the like.

The annular metal element 2 or the compressible metal ring 3 can possibly be made of several layers.

The press-on means for pressing the lid 13 against the housing 10 does not necessarily have to be bolts 15. Other embodiments cannot be excluded either, whereby appropriate methods are used for pressing the lid 13 against the housing 10, such that the seal 1 is compressed in the axial direction Z-Z'.

An improved seal 1 according to the invention is preferably made of materials which resist high pressures, high and low temperatures or corrosive chemical environments. Typically, use is made of stainless steel, metal alloys with a high nickel content or so-called super alloys. Any other metal alloys or light metal alloys leading to an improved leak-tightness are possible as well.

The invention is by no means limited to the embodiment given as an example and represented in the accompanying drawings; on the contrary, such an improved seal can be made in all sorts of shapes and dimensions while still remaining within the scope of the invention as defined by the appended claims.

## Claims

1. Improved seal (1) which seals a shaft (8) moving in a passage (9) in relation to a housing (10) from said housing (10), whereby the seal (1) is located in a groove (11) of the wall (12) that separates the housing (10) from the passage (9), **characterised in that** the improved seal (1) mainly consists of an annular metal element (2) with a cross section formed of a first predominantly U-shaped or C-shaped part (4) with two legs (5,6) on either side of the centreline surface (X-X') of the annular element (2) perpendicular to the axis (Z-Z') around which the shaft (8) rotates and a second lip-shaped part (7) connected to the latter on the one hand, and of means (3) which make it possible, when the seal is compressed in a direction which is orthogonal to the above mentioned surface (X-X') of the seal (1), to push the lip-shaped part (7) away from the U-shaped or C-shaped part (4) on the other hand.

2. Improved seal according to claim 1, **characterised in that** the U-shaped or C-shaped part (4) extends symmetrically in relation to the surface (X-X') of the seal.

3. Improved seal according to any one of claims 1 or 2, **characterised in that** the lip-shaped part (7) extends in the prolongation of one of the legs (5) of the U-shaped or C-shaped part (4) .

4. Improved seal according to any one of the preceding claims, **characterised in that** the lip-shaped part (7) extends with at least one part almost diagonally to the surface (X-X') of the seal (1).

5. Improved seal according to any one of the preceding claims, **characterised in that** the lip-shaped part (7) extends on either side of the surface (X-X') of the seal.

6. Improved seal according to any one of the preceding claims, **characterised in that** the annular metal element (2) is made of an elastic metal.

7. Improved seal according to any one of the preceding claims, **characterised in that** the above-mentioned means (3) are formed of a metal compressible ring (3) which is held in the U-shaped or C-shaped part (4) of the annular metal element (2).

8. Improved seal according to claim 7, **characterised in that** the compressible ring (3) is made hollow.

9. Improved seal according to any one of claims 7 or 8, **characterised in that** the compressible ring (3) has an annular cross section.

10. Improved seal according to claim 9, **characterised in that** the outer diameter (A) of the annular cross section of the compressible ring (3) mainly corresponds to the inner diameter (B) of the U-shaped or C-shaped part (4) of the cross section of the annular metal element (2).

11. Improved seal according to any one of the preceding claims, **characterised in that** it is made of a corrosion-resistant material.

12. Improved seal according to any one of the preceding claims, **characterised in that** it is made of stainless steel.

13. Improved seal according to any one of the preceding claims, **characterised in that** it is made of a high-grade nickel alloy.

14. Improved seal according to any one of the preceding claims, **characterised in that** it is made of a super alloy.

15. Improved seal according to any one of the preceding claims, **characterised in that** it is made of a metal or light metal alloy.

16. Improved seal according to any one of the preceding claims, **characterised in that** it is made of a heat-resistant or cold-resistant material.

17. Improved seal according to any one of the preceding claims, **characterised in that** the shape and dimensions are such that the seal can resist high pressures.

## Patentansprüche

1. Verbesserte Dichtung (1), die eine Welle (8), die sich in einem Durchgang (9) in Bezug auf ein Gehäuse (10) bewegt, von diesem Gehäuse (10) abdichtet, wobei die Dichtung (1) sich in einer Nut (11) der Wand (12), die das Gehäuse (10) von dem Durchgang (9) trennt, befindet, **dadurch gekennzeichnet dass** die verbesserte Dichtung (1) im Wesentlichen einerseits aus einem ringförmigen Metallelement (2) mit einem Querschnitt, der von einem ersten, vorwiegend U-förmigen oder C-förmigen Teil (4) mit zwei Schenkeln (5,6) an beiden Seiten der Mittellinienfläche (X-X') des ringförmigen Elements (2) lotrecht zu der Achse (Z-Z'), um die die Welle (8) rotiert, und einem zweiten lippenförmigen Teil (7), das mit dem letzteren verbunden ist, gebildet wird, und andererseits aus Mitteln (3), die es ermöglichen, wenn die Dichtung in einer Richtung zusammengedrückt wird, die rechtwinklig zu der vorgenannten Fläche (X-X') der Dichtung (1) ist, den lippenförmigen Teil (7) von dem U-förmigen oder C-förmigen Teil (4) wegzudrücken, besteht.

2. Verbesserte Dichtung nach Anspruch 1, **dadurch gekennzeichnet, dass** der U-förmige oder C-förmige Teil (4) sich symmetrisch bezüglich der Fläche (X-X') der Dichtung erstreckt.

3. Verbesserte Dichtung nach einem der Ansprüche 1 oder 2, **dadurch gekennzeichnet, dass** der lippenförmige Teil (7) sich in der Verlängerung eines der Schenkel (5) des U-förmigen oder C-förmigen Teils (4) erstreckt.

4. Verbesserte Dichtung nach einem der vorgenannten Ansprüche, **dadurch gekennzeichnet, dass** der lippenförmige Teil (7) sich mit mindestens einem Teil nahezu quer zur Fläche (X-X') der Dichtung (1) erstreckt.

5. Verbesserte Dichtung nach einem der vorgenannten Ansprüche, **dadurch gekennzeichnet, dass** der lippenförmige Teil (7) sich an beiden Seiten der Fläche (X-X') der Dichtung erstreckt.

6. Verbesserte Dichtung nach einem der vorgenannten Ansprüche, **dadurch gekennzeichnet, dass** das ringförmige Metallelement (2) aus einem elastischen Metall hergestellt ist.

7. Verbesserte Dichtung nach einem der vorgenannten Ansprüche, **dadurch gekennzeichnet, dass** die vorerwähnten Mittel (3) durch einen zusammendrückbaren Metallring (3) gebildet werden, der in dem U-förmigen oder C-förmigen Teil (4) des ringförmigen Metallelements (2) gehalten wird.

8. Verbesserte Dichtung nach Anspruch 7, **dadurch gekennzeichnet, dass** der zusammendrückbare Ring (3) hohl ausgeführt ist.

9. Verbesserte Dichtung nach einem der Ansprüche 7 oder 8, **dadurch gekennzeichnet, dass** der zusammendrückbare Ring (3) einen ringförmigen Querschnitt aufweist.

10. Verbesserte Dichtung nach Anspruch 9, **dadurch gekennzeichnet, dass** der Außendurchmesser (A) des ringförmigen Querschnitts des zusammendrückbaren Rings (3) im Wesentlichen mit dem Innendurchmesser (B) des U-förmigen oder C-förmigen Teils (4) des Querschnitts des ringförmigen Metallelements (2) übereinstimmt.

11. Verbesserte Dichtung nach einem der vorgenannten Ansprüche, **dadurch gekennzeichnet, dass** sie aus einem korrosionsbeständigen Metall hergestellt ist.

12. Verbesserte Dichtung nach einem der vorgenannten Ansprüche, **dadurch gekennzeichnet, dass** sie aus Edelstahl hergestellt ist.

13. Verbesserte Dichtung nach einem der vorgenannten Ansprüche, **dadurch gekennzeichnet, dass** sie aus einer hochwertigen Nickellegierung hergestellt ist.

14. Verbesserte Dichtung nach einem der vorgenannten Ansprüche, **dadurch gekennzeichnet, dass** sie aus einer Superlegierung hergestellt ist.

15. Verbesserte Dichtung nach einem der vorgenannten Ansprüche, **dadurch gekennzeichnet, dass** sie aus einer Metall- oder Leichtmetalllegierung hergestellt ist.

16. Verbesserte Dichtung nach einem der vorgenannten Ansprüche, **dadurch gekennzeichnet, dass** sie aus einem hitzebeständigen oder kältebeständigen Material hergestellt ist.

17. Verbesserte Dichtung nach einem der vorgenannten Ansprüche, **dadurch gekennzeichnet, dass** die Form und Abmessungen so sind, dass die Dichtung hohen Drücken widerstehen kann.

## Revendications

1. Joint d'étanchéité perfectionné (1) qui procure à un arbre (8) se déplaçant dans un passage (9) en liaison avec un logement (10) une étanchéité par rapport audit logement (10), le joint d'étanchéité (1) étant disposé dans une rainure (11) de la paroi (12) qui sépare le logement (10) du passage (9), **caractérisé en ce que** le joint d'étanchéité perfectionné (1) est constitué principalement par un élément métallique annulaire (2) dont la section transversale est formée par une première partie (4) possédant principalement la configuration d'un U ou la configuration d'un C, comportant deux branches (5,6) de part et d'autre de la surface axiale (X-X') de l'élément annulaire (2) perpendiculaire à l'axe (Z-Z') autour duquel tourne l'arbre (8) et par une deuxième partie (7) en forme de lèvre, reliée à ce dernier, d'une part, et par des moyens (3) qui permettent, lorsque le joint d'étanchéité est comprimé dans une direction qui est orthogonale à la surface susmentionnée (X-X') du joint d'étanchéité (1), de pousser la partie (7) en forme de lèvre à l'écart de la partie (4) possédant la configuration d'un U ou la configuration d'un C, d'autre part.

2. Joint d'étanchéité perfectionné selon la revendication 1, **caractérisé en ce que** la partie (4) possédant la configuration d'un U ou la configuration d'un C s'étend de manière symétrique par rapport à la surface (X-X') du joint d'étanchéité.

3. Joint d'étanchéité perfectionné selon l'une quelconque des revendications 1 ou 2, **caractérisé en ce que** la partie (7) en forme de lèvre s'étend dans le prolongement d'une des branches (5) de la partie (4) possédant la configuration d'un U ou la configuration d'un C.

4. Joint d'étanchéité perfectionné selon l'une quelconque des revendications précédentes, **caractérisé en ce que** la partie (7) en forme de lèvre s'étend avec au moins une partie pratiquement en diagonale par rapport à la surface (X-X') du joint d'étanchéité (1).

5. Joint d'étanchéité perfectionné selon l'une quelconque des revendications précédentes, **caractérisé en ce que** la partie (7) en forme de lèvre s'étend de part et d'autre de la surface (X-X') du joint d'étanchéité.

6. Joint d'étanchéité perfectionné selon l'une quelconque des revendications précédentes, **caractérisé en ce que** l'élément métallique annulaire (2) est réalisé en un métal élastique.

7. Joint d'étanchéité perfectionné selon l'une quelconque des revendications précédentes, **caractérisé en ce que** les moyens susmentionnés (3) sont réalisés sous la forme d'un anneau métallique compressible (3) qui est maintenu dans la partie (4) possédant la configuration d'un U ou la configuration d'un C de l'élément métallique annulaire (2).

8. Joint d'étanchéité perfectionné selon la revendication 7, **caractérisé en ce que** l'anneau compressible (3) est creux.

9. Joint d'étanchéité perfectionné selon l'une quelconque des revendications 7 ou 8, **caractérisé en ce que** l'anneau compressible (3) possède une section transversale annulaire.

10. Joint d'étanchéité perfectionné selon la revendication 9, **caractérisé en ce que** le diamètre externe (A) de la section transversale annulaire de l'anneau compressible (3) correspond principalement au diamètre interne (B) de la partie (4) possédant la configuration d'un U ou la configuration d'un C de la section transversale de l'élément métallique annulaire (2).

11. Joint d'étanchéité perfectionné selon l'une quelconque des revendications précédentes, **caractérisé en ce qu'**il est réalisé en un matériau résistant à la corrosion.

12. Joint d'étanchéité perfectionné selon l'une quelconque des revendications précédentes, **caractérisé en ce qu'**il est réalisé en acier inoxydable.

13. Joint d'étanchéité perfectionné selon l'une quelconque des revendications précédentes, **caractérisé en ce qu'**il est réalisé en un alliage à haute teneur en nickel.

14. Joint d'étanchéité perfectionné selon l'une quelconque des revendications précédentes, **caractérisé en ce qu'**il est réalisé en un superalliage.

15. Joint d'étanchéité perfectionné selon l'une quelconque des revendications précédentes, **caractérisé en ce qu'**il est réalisé en un alliage métallique ou en un alliage léger.

16. Joint d'étanchéité perfectionné selon l'une quelconque des revendications précédentes, **caractérisé en ce qu'**il est réalisé en un matériau résistant à la chaleur ou résistant au froid.

17. Joint d'étanchéité perfectionné selon l'une quelconque des revendications précédentes, **caractérisé en ce que** la configuration et les dimensions sont telles que le joint d'étanchéité est à même de résister à des pressions élevées.
